**Europäisches Patentamt**

**European Patent Office**

**Office européen des brevets**

(19)

(11) Veröffentlichungsnummer : **0 407 710 B1**

## (12) EUROPÄISCHE PATENTSCHRIFT

(45) Veröffentlichungstag der Patentschrift :
**12.08.92 Patentblatt 92/33**

(51) Int. Cl.⁵ : **B60C 27/14**

(21) Anmeldenummer : **90109349.2**

(22) Anmeldetag : **17.05.90**

---

(54) **Gleitschutzvorrichtung für einen Kraftfahrzeugreifen.**

---

(30) Priorität : **13.07.89 DE 3923206**

(43) Veröffentlichungstag der Anmeldung :
**16.01.91 Patentblatt 91/03**

(45) Bekanntmachung des Hinweises auf die
Patenterteilung :
**12.08.92 Patentblatt 92/33**

(84) Benannte Vertragsstaaten :
**AT BE CH DE DK ES FR GB GR IT LI LU NL SE**

(56) Entgegenhaltungen :
**DE-A- 2 652 996**
**US-A- 1 462 789**

(56) Entgegenhaltungen :
**US-A- 1 466 374**
**US-A- 1 981 291**
**US-A- 2 166 869**
**US-A- 3 042 095**

(73) Patentinhaber : **OBERLAND-Schneeketten**
**Anton Mangold**
**Amselstrasse 4**
**W-8100 Garmisch-Partenkirchen (DE)**

(72) Erfinder : **Mangold, Anton**
**Amselstrasse 4**
**W-8100 Garmisch-Partenkirchen (DE)**

(74) Vertreter : **Heim, Hans-Karl, Dipl.-Ing. et al**
**c/o Weber & Heim Hofbrunnstrasse 36**
**W-8000 München 71 (DE)**

**EP 0 407 710 B1**

Jouve, 18, rue Saint-Denis, 75001 PARIS

## Beschreibung

Die Erfindung betrifft eine Gleitschutzvorrichtung für einen Fahrzeugreifen, die einen an zwei Enden lösbar zu verbindenden Gleitschutzgurt, eine fahrzeugseitige Hilfsvorrichtung mit einem Lenkarm zum Heranführen und Aufziehen des Gleitschutzgurtes auf den Fahrzeugreifen sowie einen fahrzeugseitigen Stauraum zur Aufnahme des Gleitschutzgurtes im inaktivierten Zustand umfaßt.

Gleitschutzketten, die von Hand auf den Fahrzeugreifen aufgezogen werden müssen, sind weit verbreitet. Ferner sind auch Gleitschutzvorrichtungen bekannt, mit welchen das Umgürten der Fahrzeugreifen mit mechanischen Hilfsvorrichtungen erfolgt, ohne daß eine Bedienperson unmittelbar eingreifen muß. Hierbei ist es lediglich erforderlich, daß die Hilfsvorrichtungen gestartet oder betätigt werden, während das eigentliche Aufziehen des Gleitschutzgurtes selbsttätig erfolgt.

Eine gattungsgemäße Gleitschutzvorrichtung ist in der DE-A- 26 52 996 beschrieben. Die Gleitschutzgurte werden hierbei in Magazinen in oder am Kraftfahrzeug mitgeführt und mit einer elektromotorisch angetriebenen Vorrichtung aus den Magazinen vor die Räder geschoben. Beim Darauffahren schlingen sie sich um die Reifen und verschließen sich selbsttätig. Der Gleitschutzgurt trägt in der Mittelzone seiner Innenseite Nadeln, die sich beim Aufrollen des Reifens in die Lauffläche eindrücken und ihn auf diesem festhalten, so daß der Gurt beim langsamen Weiterfahren um den Reifen herumgeschlungen wird.

Das hat den Nachteil, daß der Reifen einem starken Verschleiß ausgesetzt ist.

Der Erfindung liegt die **Aufgabe** zugrunde, eine Gleitschutzvorrichtung der eingangs genannten Art anzugeben, mit welcher der Gleitschutzgurt zuverlässig um den Reifen geschlungen wird, ohne daß hierbei die Reifenfläche einem Verschleiß ausgesetzt ist.

Diese Aufgabe wird gemäß dem kennzeichnenden Teil des unabhängigen Anspruchs beschrieben.

Ein Grundgedanke der Erfindung besteht darin, den Anfang des Gleitschutzgurtes mit einem Federbügel zu versehen, der in der Weise auf den Reifen aufgesetzt wird, daß seine Schenkel an die Reifenflanken angepreßt werden. Dies hat den Vorteil, daß dieses Ende sowie der Gleitschutzgurt eine definierte Lage am Reifen einnehmen, so daß die selbsttätige Einrastung des Kettenverschlusses nach einer Radumdrehung zuverlässig erfolgt. Ein weiterer Vorteil besteht darin, daß sich der Bügel und damit das betreffende Verschlußglied des Gleitschutzgurtes in die erforderliche Position ausrichten, sobald der Bügel im Verlauf der Radumdrehung zwischen Reifen und Fahrbahn gelangt. Der dabei zwangsläufig herbeigeführte exakte Sitz gewährleistet ein sicheres Einrasten der anfangs- und endseitigen Verschlußteile.

Eine bevorzugte Weiterbildung der Erfindung besteht darin, daß der Lenkarm an seinem freien Ende eine Rolle aufweist, deren Achse parallel zur Schwenk- und Radachse verläuft, daß der Gleitschutzgurt im inaktivierten Zustand auf der Rolle in der Art einer Vorratsspule aufgerollt ist, und daß die Rolle seitliche Ränder aufweist, die in einem axialen Abstand voneinander angeordnet sind, der größer ist als die Reifenbreite, und daß an den Rändern die Verschlußteile des Gleitschutzgurtes ein schließlich des Federbügels mit einer federnd einrastenden/ausrastenden Halterung lagerichtig zum Aufsetzen auf den Reifen bzw. zum Ineinandergreifen der Verschlußteile angeordnet sind.

Durch die Kombination von Lenkarm und der als Stauraum dienenden Rolle wird eine besonders einfache raum- und materialsparende Unterbringung des Gleitschutzgurtes erreicht.

Eine vorteilhafte Alternative hierzu kann darin bestehen, daß die Rolle lediglich zur Halterung der Verschlußteile sowie zur Einspeisung des Gleitschutzgurtes synchron zur Reifendrehung dient, während die Aufbewahrung des Gleitschutzgurtes in einem kastenförmigen Magazin erfolgt.

Das ordnungsgemäße, faltenfreie Umschlingen des Reifens wird dadurch unterstützt, daß die Rolle mit einer vorgegebenen Bremskraft, bevorzugt mittels einer unter Federvorspannung stehenden Bremsvorrichtung, beaufschlagt ist. Durch diese Maßnahme wird das Abhaspeln des Gleitschutzgurtes abgebremst und es wird verhindert, daß der Gurt aufgrund seines Eigengewichts unkontrolliert aus dem dafür vorgesehenen Stauraum bzw. der Vorratsrolle herausbewegt wird.

Eine besonders geeignete Bremsvorrichtung besteht aus einer Spiralfeder, die an einem Ende ortsfest mit dem Lenkarm und am anderen Ende mit der Rolle verbunden ist. Die Feder wird beim Auf-Aufziehen des Gurtes gespannt und wird beim Zurückspulen des Gurtes in die Ruhelage entspannt, so daß dieser Vorgang unterstützt und erleichtert wird.

Eine automatische Verriegelung der beiden Enden des Gleitschutzgurtes nach einer Radumdrehung wird dadurch erreicht, daß an den Schenkeln des Federbügels im Bereich der Reifenflanken jeweils ein Haken mit einem Fangmaul und am anderen Ende des Gleitschutzgurtes jeweils zugehörige Ösen vorhanden sind.

Ferner ist es für einen guten Sitz des Gleitschutzgurtes auf dem Reifen vorteilhaft, daß der Haken und die Öse im Bereich einer Reifenflanke mit einem Kettenstrang verbunden sind, der im aufgezogenen Zustand an der Reifenflanke entlanggeführt und über Querstränge mit dem Laufnetz oder ähnlichem des Gleitschutzgurtes verbunden ist.

Insbesondere für die Reifen von Lastkraftwagen besteht eine bevorzugte alternative Weiterbildung der Erfindung darin, daß im Bereich der beiden Reifenflanken jeweils ein mit einem Fangmaul versehener Doppelhaken angeordnet und über einen Fuß an der zugehörigen Felge befestigt ist, und daß die Verschlußteile des Gleitschutzgurtes an beiden Enden aus jeweils einer Öse bestehen. Die Doppelhaken, die jede Drehung des Reifens mitmachen, leiten das Aufziehen des Gleitschutzgurtes ein, sobald der Lenkarm in die entsprechende Position gebracht ist. Hierbei gelangen die Doppelhaken zunächst in Eingriff mit denjenigen Ösen, die am "freien" Ende des Gleitschutzgurtes angebracht sind. Nach einer Radumdrehung rasten die Doppelhaken in die Ösen am Kettenende ein.

Die lagerichtige Halterung der Verschlußteile an der Rolle wird bevorzugt dadurch erreicht, daß die Verschlußstücke mit einem Formstück, beispielsweise mit einem Zapfen, versehen sind, und daß die Halterungen jeweils aus paarweise angeordneten federnden Halteschenkeln bestehen, welche die Formstücke lösbar aufnehmen.

Der Bedienungskomfort wird ferner dadurch noch weiter erhöht, daß die Rolle mit einer Betätigungsvorrichtung zum Zurückbefördern bzw. Zurückspulen des Gleitschutzgurtes versehen ist. Grundsätzlich kann dies motorisch erfolgen, wenngleich es ausreichend sein dürfte, wenn die Betätigungsvorrichtung aus einer Handkurbel besteht, wobei eine Vorlaufsperre ein unbeabsichtigtes Drehen entgegen der Rückspulrichtung verhindert, wenn die Handkurbel beim Aufhaspeln losgelassen wird.

Es kann vorteilhaft sein, daß eine hydraulische oder pneumatische Betätigungsvorrichtung für den Lenkarm vorhanden ist. Eine federnde Vorspannung des Lenkarms vom Reifen weg hat den Vorteil, daß der Schwenkarm in seiner Außerbetriebstellung selbsttätig ausreichend weit vom Reifen weggehalten wird.

Nachfolgend wird die Erfindung anhand von zwei in der Zeichnung dargestellten Ausführungsbeispielen weiter beschrieben:

Fig. 1 zeigt schematisch ein erstes Beispiel einer Gleitschutzvorrichtung in der Anfangsphase eines Aufziehvorgangs eines Gleitschutzgurtes auf einen Fahrzeugreifen;

Fig. 2 zeigt schematisch einen Teilquerschnitt durch die Konfiguration gemäß Fig. 1; und

Fig. 3 zeigt schematisch ein weiteres Beispiel einer Gleitschutzvorrichtung mit einem Fahrzeugreifen in einer Ansicht in Achsrichtung des Fahrzeugreifens.

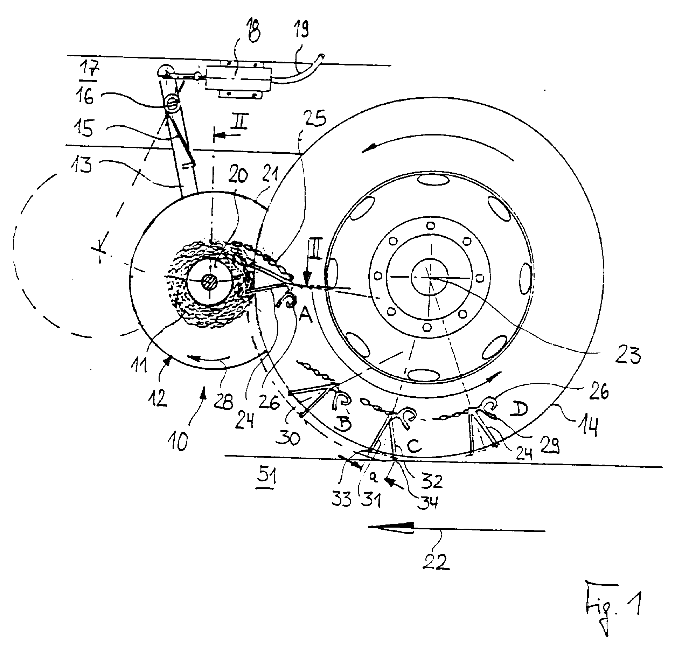

In Fig. 1 ist mit 10 eine Gleitschutzvorrichtung bezeichnet, welche einen Gleitschutzgurt 11 sowie eine Rolle 12 am freien Ende eines Lenkarms 13 umfaßt. Die Rolle 12 ist achsparallel zu einem Fahrzeugreifen 14 angeordnet und über den Lenkarm 13 zwischen einer gestrichelt dargestellten Ruheposition in eine Betriebsposition verschwenkbar, die mit durchgehender Linie wiedergegeben ist. Der Lenkarm 13 ist bei 16 an der Karrosserie oder am Fahrgestell 17 des betreffenden Fahrzeugs schwenkbar gelagert. Er wird über eine Schenkelfeder 15 in Richtung auf die Ruhestellung, d.h. vom Reifen 14 weg, vorgespannt. Die Betätigung des Lenkarms 13 erfolgt im übrigen über eine hydraulische Kolben-/Zylinderanordnung 18, die über eine Steuerleitung 19 beispielsweise vom Führerhaus des betreffenden Fahrzeugs angesteuert werden kann.

Die Rolle 12 dient in dem dargestellten Beispiel zur Aufnahme des Gleitschutzgurtes 11, wenn er nicht benötigt wird. Dieser ist daher auf eine Trommel 20 aufgerollt. Seitlich wird er von jeweils einer Scheibe 21 gesichert. In der Fig. 1 ist die dem Betrachter zugewandte Scheibe entfernt, so daß der auf die Trommel 20 aufgerollte Gleitschutzgurt 11 sichtbar ist.

Die Trommel 20 liegt in Fahrtrichtung 22 gesehen vor dem Reifen 14 bevorzugt etwa in Höhe der Radachse 23.

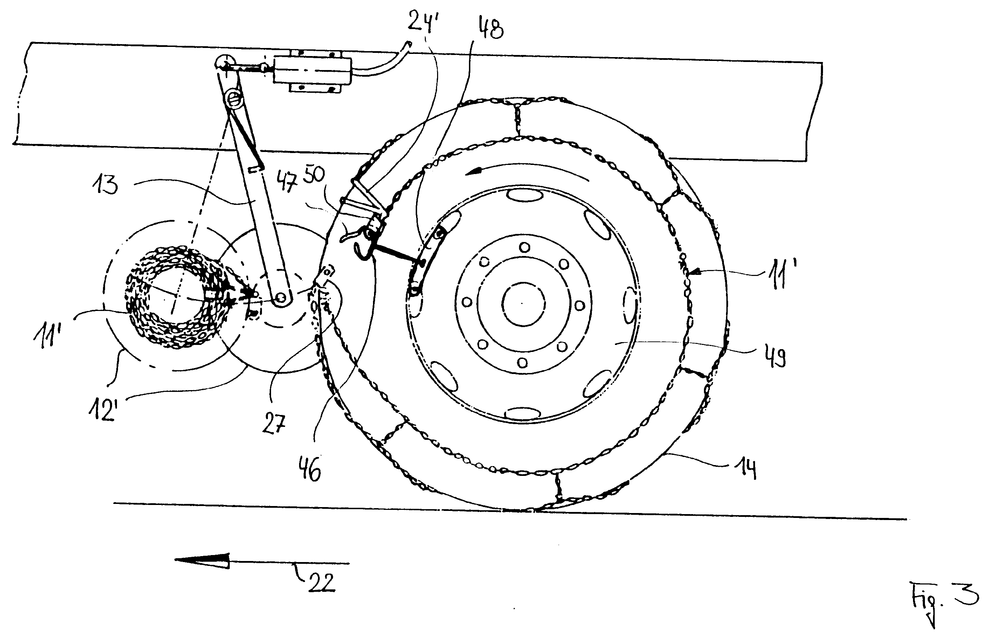

Auf der Innenseite der Scheiben 21 ist ein Federbügel 24 lösbar gehaltert, an welchem die Enden von zwei Seitensträngen 25 des Gleitschutzgurtes 11 befestigt sind, die im aufgezogenen Zustand entlang der Reifenflanken (s. Fig. 3) verlaufen. In der Fig. 1 sind lediglich die der vorderen Reifenflanke zugeordneten Schenkel des Federbügels 24 sowie der zugehörige Seitenstrang ersichtlich, während die gegenüberliegenden Schenkel mit dem zugehörigen Seitenstrang durch den Reifen 14 verdeckt sind.

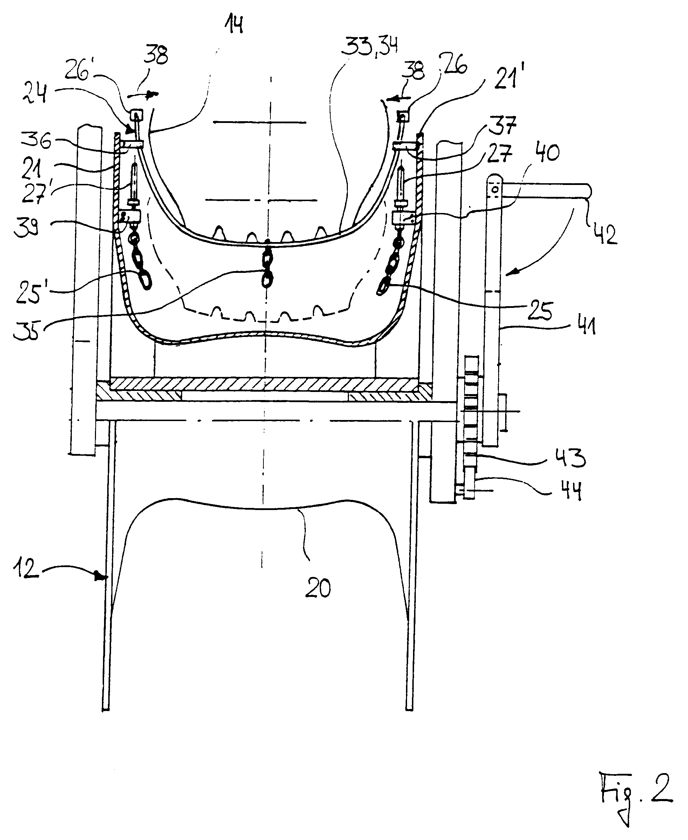

An den freien Enden der Federbügelschenkel ist ein mit einem Fangmaul versehener Haken 26 angeordnet, der mit einer Öse 27 (Fig. 2 und 3) am anderen Ende des betreffenden Seitenstranges 25 als Verschluß des Gleitschutzgurtes 11 zusammenwirkt. Die Ösen sind ebenfalls lösbar auf den Innenseiten der Scheiben 21 befestigt.

Im Bedarfsfall, wenn der Gleitschutzgurt 11 auf den Reifen 14 aufgezogen werden soll, wird die Rolle 12 mittels der Hydraulikvorrichtung 18 in die dargestellte Arbeitsposition gebracht, in welcher die Wicklung des Gleitschutzgurtes 11 in Kontakt mit der Lauffläche des Reifens 14 gelangt. Hierbei übergreifen die Scheiben 21 teilweise die Flanken des Reifens 14. Das Fahrzeug bewegt sich dabei gemäß Pfeil 22 weiter.

Durch den Kontakt zwischen der Aufwicklung des Gleitschutzgurtes 11 und dem Reifen 14 wird die Rolle 12 gemäß Pfeil 28 verdreht und der Federbügel 24 wird unter Führung durch die Scheiben 21 auf den Reifen 14 aufgeschoben, wie es die Pos. A veranschaulicht. Durch die Federkraft der Schenkel wird der Federbügel 24 an den Reifenflanken gehalten und bei der Weiterdrehung des Reifens 14 aus seinen Halterungen auf den

3

Scheiben 21 gelöst. Im weiteren Verlauf der Drehung wird der Gleitschutzgurt 11 synchron abgespult, bis er nach einer Radumdrehung vollständig auf den Reifen 14 aufgezogen ist.

Der Federbügel 24 ist selbstjustierend ausgeformt, so daß er nach etwa einer 1/4-Radumdrehung, wenn er zwischen die Fahrbahn 51 und die Lauffläche des Reifens 14 gelangt, zwangsweise so ausgerichtet wird, daß er einen exakten, zuverlässigen Sitz gemäß Pos. D einnimmt, der ein Einrasten der Gleitschutzgurt-Verschlüsse (Haken 26, Öse 27) nach einer Radumdrehung sicherstellt. Insbesondere wird die Ausrichtung des mit einem Fangmaul 29 versehenen Hakens 26 in die optimale Richtung durchgeführt, in welcher das Fangmaul 29 die Öse "einfängt", wenn der Bügel 24 nach einer Radumdrehung an der Rolle 12 bereitgehalten wird. Die bezüglich der Rad- und Rollenumdrehung exakte Winkelzuordnung wird durch die synchrone Drehung erreicht.

Der im wesentlichen U-förmige Federbügel 24 ist so ausgeformt, daß er in seinem die beiden Schenkel verbindenden Bereich 30, der sich im aufgesetzten Zustand vor der Lauffläche des Reifens 14 befindet, in Umfangsrichtung des Reifens eine vorgegebene Ausdehnung aufweist. In dem dargestellten Beispiel wird dies dadurch erreicht, daß die beiden Schenkel jeweils ausgehend von einem gemeinsamen Endpunkt V-förmig auf einen vorgegebenen Abstand a aufgespreizt sind und daß die entsprechenden Schenkelteile 31,32 über senkrecht zur Zeichenebene verlaufenden Stege 33,34 mit den entsprechenden Schenkelteilen an der anderen Reifenflanke verbunden sind.

Wird der Federbügel 24 daher zunächst nicht in der exakt ausgerichteten Position, sondern mit einer leichten Verkantung gemäß Position B auf den Reifen 14 aufgedrückt, so wirkt der Bereich 30 als Hebel, auf den beim Weiterrollen gemäß Position C von der Fahrbahn 51 eine Kraft ausgeübt wird, welche beide Stege 33,34 an die Reifenlauffläche drückt und die Verkantung ausgleicht.

In der Teilquerschnittsdarstellung der Fig. 2 wurde auf die Wiedergabe des Gleitschutzgurtes 11 (Fig. 1) verzichtet, um die Darstellung übersichtlich zu halten. Es sind lediglich die Enden des vorderen und hinteren Seitenstranges 25, 25′ sowie der Anfang eines Längsstranges 35, der in der Fahrspurmitte verläuft, dargestellt. Die Fig. 2 zeigt den Federbügel 24 in der Position A (Fig. 1), in welcher die in der Reifenflucht angeordnete Rolle 12 an den Reifen 14 angedrückt ist.

Am äußeren Rand der Scheiben 21,21′ sind lösbare Halterungen 36, 37 für den Federbügel 24 befestigt. Sie bestehen aus federnden Schenkeln, welche den Federbügel 24 hinter dem Haken 26 bzw. 26′ lösbar halten. Wenn die Lauffläche des Reifens 14 mit zumindest einem der beiden, die beiden Schenkel 26,26′ verbindenden Stege 33 bzw. 34 in Eingriff gelangt, so löst sie den Federbügel 24 aus den Halterungen 36, 37. Aufgrund der Federspannung legen sich die Schenkel 26, 26′ gemäß Pfeilen 38 an die Reifenflanken an. Wenn der Berührungspunkt mit den Reifenflanken hierbei hinter der stärksten Reifenausbauchung liegt, erhält man einen besonders guten Sitz.

In Fig. 2 ist der Reifenquerschnitt ferner gestrichelt in einer Position zwischen den Scheiben 21, 21′ dargestellt, die er nach einer Reifenumdrehung einnimmt. In dieser Situation ist der Gleitschutzgurt 11 vollständig aufgezogen, d.h. der Reifen steht in Kontakt mit der Trommel 20. Die Haken 26, 26′ befinden sich in Umfangsrichtung unmittelbar vor den Ösen 27, 27′, die auf gleiche Weise wie die Haken 26, 26′ mittels federnder Halterungen 39,40 radial nach innen versetzt auf den Scheiben 21, 21′ lösbar gehalten sind. Die Ösen 27, 27′ werden mit den Fangmäulern 29 (Fig. 1) erfaßt und bei der Weiterdrehung des Reifens aus den Halterungen 39, 40 gelöst. Eine im einzelnen nicht dargestellte Sicherung verhindert, daß sich die Ösen 27, 27′ anschließend wieder von den Haken 26, 26′ lösen können.

Wenn die Rolle 12 nach dem Aufziehvorgang vom Reifen 14 weggeschwenkt wird, kann das Fahrzeug ohne Halt seine Fahrt fortsetzen.

Wie die Fig. 2 weiter zeigt, ist die Rolle 12 mit einer Handkurbel 41 mit angelenktem Griff 42 versehen, mit welcher der Gleitschutzgurt 11 (Fig. 1) nach dem Einsatz wieder aufgehaspelt werden kann. Die Handkurbel 41 wirkt mit einer Sicherung zusammen, die aus einem Zahnraster 43 und einer Klinke 44 besteht. Somit kann die Handkurbel 41 während der Tätigkeit losgelassen werden, ohne daß der bereits aufgerollte Teil des Gleitschutzgurtes 11 aufgrund seines Eigengewichts wieder abgespult wird.

Bei dem in Fig. 3 dargestellten Ausführungsbeispiel sind gleiche Teile wie bei dem in Fig. 1 dargestellten Beispiel mit gleichen Bezugszeichen versehen, so daß sich eine weitere Beschreibung erübrigt. Die Rolle 12′ ist in strichpunktierter Darstellung in ihrer abgeschwenkten Wartestellung wiedergegeben. Im übrigen zeigt Fig. 3 schematisch eine Konstellation, in welcher der aus einem Kettennetz bestehende Gleitschutzgurt 11′ nahezu vollständig aufgezogen ist, sich die endseitigen Ösen 27 jedoch noch in ihren Halterungen an der Rolle 12′ befinden.

Die Gleitschutzvorrichtung gemäß Fig. 3 unterscheidet sich von der vorstehend beschriebenen dadurch, daß ein Doppelhaken 46 mit einem Fangmaul 47 über eine Halterung 48 an der Felge 49 des Reifens 14 verschraubt ist. Ferner ist am Federbügel 24 an Stelle eines Hakens eine weitere Öse 50 angeordnet.

Der Aufziehvorgang erfolgt in der Weise, daß der Doppelhaken 46 zunächst die weitere Öse 50 erfaßt und nach einer Radumdrehung mit der Öse 27 in Eingriff gelangt.

**Patentansprüche**

1. Gleitschutzvorrichtung für einen Fahrzeugreifen, die einen an zwei Enden lösbar zu verbindenden Gleitschutzgurt (11), eine fahrzeugseitige Hilfsvorrichtung mit einem Lenkarm (13) zum Heranführen und Aufziehen des Gleitschutzgurtes auf den Fahrzeugreifen (14) sowie einen fahrzeugseitigen Stauraum zur Aufnahme des Gleitschutzgurtes im inaktivierten Zustand umfaßt,
dadurch **gekennzeichnet,**
daß am Lenkarm (13) eine zum Reifen (14) achsparallele, in der Reifenflucht liegende Rolle (12) drehbar angeordnet ist,
daß die Rolle (12) zum Aufziehen des Gleitschutzgurtes (11) durch Heranführen des Lenkarms (13) an den Reifen (14) in Kontakt mit dem Reifen (14) zur Erzeugung einer synchronen Drehbewegung zwischen dem Reifen (14) und der Rolle (12) gebracht wird,
daß die Rolle (12) im übrigen durch Entfernung des Lenkarms (13) auf Abstand vom Reifen (14) angeordnet ist,
daß der Gleitschutzgurt (11) während der Drehbewegung des Reifens (14) bzw. der Rolle (12) von dieser abgespult wird,
daß der Gleitschutzgurt (11) anfangsseitig mit einem U-förmigen Federbügel (24) zum Aufsetzen auf den Reifen (14) unter seitlicher Umklammerung durch die beiden nach innen federnden Schenkel (31,32) versehen ist,
daß die Schenkel (31,32) hierzu bis in den Bereich der Reifenflanken reichen,
daß der die Schenkel (31,32) verbindende Bereich (30) in der aufgesetzten Position an der Lauffläche des Reifens (14) zu liegen kommt,
daß an den freien Enden der Schenkel (31,32) jeweils ein Verschlußteil (26) in vorgegebener Ausrichtung zu diesen befestigt ist,
daß der Gleitschutzgurt (11) endseitig mit Gegenstücken (27) zu den Verschlußteilen (26) versehen ist,
daß die Rolle (12) mit zwei stirnseitigen Seitenteilen (21) versehen ist, die in derjenigen Stellung, in welcher die Rolle (12) in Kontakt mit dem Reifen (14) ist, bis in die Bereiche der Seitenflanken des Reifens (14) reichen, und mit vorgegebenem axialen Abstand von diesen angeordnet sind,
daß an den Seitenteilen (21) lösbare Halterungen (36,37) für die anfangsseitigen Verschlußteile (26) bzw. den Federbügel (24) und die endseitigen Gegenstücke (27) angeordnet sind, die radial sowie in Abhängigkeit von der Länge des Gleitschutzgurtes (11) gegebenenfalls in Umfangsrichtung versetzt und in vorgegebener Ausrichtung auf die anfangsseitigen Verschlußteile (26) angeordnet sind, und
daß der Federbügel (24) im Bereich der Reifenlauffläche mit einem in Umfangsrichtung des Reifens (14) ausgerichteten Hebelarm versehen ist, der im aufgesetzten Zustand und bei einer Reifendrehung zwischen Lauffläche und Fahrbahn (51) gelangt, und durch den Anpreßdruck eine vorgegebene Ausrichtung des Federbügels (24) bzw. der daran angeordneten Verschlußteile (26) bezüglich des Reifens (14) bewirkt.

2. Gleitschutzvorrichtung nach Anspruch 1,
dadurch **gekennzeichnet,**
daß der Gleitschutzgurt (11) im inaktivierten Zustand auf der Rolle (12) in der Art einer Vorratsspule aufgerollt ist und daß die Seitenteile als Scheiben (21) ausgebildet sind.

3. Gleitschutzvorrichtung nach Anspruch 1,
dadurch **gekennzeichnet,**
daß die Rolle (12) ausschließlich zur Halterung der Verschlußteile (26) und der Gegenstücke (27) sowie zur synchronen Einspeisung des Gleitschutzgurtes (11) dient, und daß die Aufbewahrung des Gleitschutzgurtes (11) in einem separaten Magazin erfolgt.

4. Gleitschutzvorrichtung nach einem der vorhergehenden Ansprüche,
dadurch **gekennzeichnet,**
daß die Rolle (12) mit einer Bremsvorrichtung zur Beaufschlagung mit einer vorgegebenen Bremskraft versehen ist.

5. Gleitschutzvorrichtung nach Anspruch 4,
dadurch **gekennzeichnet,**
daß die Bremsvorrichtung aus einer Spiralfeder besteht, die an einem Ende ortsfest mit dem Lenkarm (13) und am anderen Ende mit der Rolle (12) verbunden ist.

6. Gleitschutzvorrichtung nach einem der vorhergehenden Ansprüche,
dadurch **gekennzeichnet,**
daß an den Schenkeln (31,32) des Federbügels (24) jeweils ein Haken (26) mit einem Fangmaul (29) und am anderen Ende des Gleitschutzgurtes (11) jeweils zugehörige Ösen (27) vorhanden sind.

7. Gleitschutzvorrichtung nach Anspruch 6,

dadurch **gekennzeichnet,**
daß der Haken (26)und die Öse (27)über einen Kettenstrang (25) miteinander verbunden sind, der im aufgezogenenen Zustand des Gleitschutzgurtes (11) an der zugehörigen Reifenflanke entlang geführt und über Querstränge mit einem Laufnetz oder ähnlichem des Gleitschutzgurtes (11) verbunden ist.

8. Gleitschutzvorrichtung nach einem der vorhergehenden Ansprüche,
dadurch **gekennzeichnet,**
daß im Bereich der beiden Reifenflanken jeweils ein mit einem Fangmaul (47) versehener Doppelhaken (46) angeordnet und über eine Halterung (48) an der zugehörigen Felge (49) befestigt ist, und daß die Verschlußteile des Gleitschutzgurtes (11') an beiden betreffenden Enden aus jeweils einer Öse (27,50) bestehen.

9. Gleitschutzvorrichtung nach einem der vorhergehenden Ansprüche,
dadurch **gekennzeichnet,**
daß die Verschlußstücke (26,27,50) des Gleitschutzgurtes (11,11') mit einem Formstück, beispielsweise mit einem Zapfen, versehen sind, und daß die zugehörigen Halterungen (36,37) jeweils aus paarweisen angeordneten federnden Halteschenkeln bestehen, welche die Formstücke lösbar aufnehmen.

10. Gleitschutzvorrichtung nach einem der vorhergehenden Ansprüche,
dadurch **gekennzeichnet,**
daß die Rolle (12) mit einer Betätigungsvorrichtung zum Zurückbefördern bzw. Zurückspulen des Gleitschutzgurtes (11) versehen ist.

11. Gleitschutzvorrichtung nach Anspruch 10,
dadurch **gekennzeichnet,**
daß die Betätigungsvorrichtung aus einer Handkurbel (41) und einer Vorlaufsperre gegen unbeabsichtigtes Drehen entgegen der Rückspulrichtung besteht.

12. Gleitschutzvorrichtung nach einem der vorhergehenden Ansprüche,
dadurch **gekennzeichnet,**
daß eine hydraulische oder pneumatische Betätigungsvorrichtung für den Lenkarm (13) vorhanden ist.

13. Gleitschutzvorrichtung nach einem der vorhergehenden Ansprüche,
dadurch **gekennzeichnet,**
daß der Lenkarm (13) mit einer federnden Vorspannung vom Reifen (14) weg beaufschlagt ist.

## Claims

1. Non-skid device for a vehicle tyre comprising a non-skid belt (11) to be detachably connected at both ends, a vehicle-side auxiliary device with a guide arm (13) for moving up and fitting the non-skid belt onto the vehicle tyre (14), as well as a vehicle-side storage area for receiving the non-skid belt in the non-activated state, **characterized** in that
on the guide arm (13) is arranged in rotary manner a reel (12) axially parallel to the tyre (14) and aligned with the tyre,
that for fitting the non-skid belt (11), by moving the guide arm (13) up to the tyre (14), the reel (12) can be brought into contact with the tyre (14) for producing a synchronous rotary movement between the tyre (14) and the reel (12),
that the reel (12) is spaced from the tyre (14) by removing the guide arm (13),
that during the rotary movement of the tyre (14) or the roll (12) the non-skid belt (11) is unwound from said reel,
that the beginning of the non-skid belt (11) is provided with a U-shaped spring clip (24) for mounting on the belt (14) accompanied by lateral envelopment by the two, inwardly resilient legs (31, 32),
that for this purpose the legs (31, 32) extend into the vicinity of the tyre sides,
that the area (30) connecting the legs (31, 32) in the fitted position is located on the tread of the tyre (14),
that to each of the free ends of the legs (31, 32) is fixed a closure part (26) in a predetermined orientation with respect thereto,
that the non-skid belt (11) is provided at the end with counterparts (27) to the closure parts (26),
that the reel (12) is provided with two frontal side parts (21), which extend into the vicinity of the sides of the tyre (14) in the position in which the reel (12) is in contact with said tyre (14) and are positioned at a predetermined axial distance therefrom,
that on the side parts (21) are provided detachable fastenings (36, 37) for the starting closure parts (26) or the spring clip (24) and the terminal counterparts (27), which are displaced radially and, as a function of the length of the non-skid belt (11), optionally also circumferentially and are located in a predetermined orientation on the starting closure parts (26) and
that in the vicinity of the tyre tread the spring clip (24) is provided with a lever arm oriented in the circumferential direction of the tyre and which comes between the tread and the road (51) in the fitted state and on rotating the tyre and as a result of the contact pressure brings about a predetermined orientation of the spring clip (24) or the closure parts (26) placed thereon with respect to the tyre (14) .

2. Non-skid device according to claim 1,
**characterized** in that
in the non-activated state the non-skid belt (11) is rolled onto the reel (12) in the manner of a delivery spool and that the side parts are constructed as disks (21).

3. Non-skid device according to claim 1,
**characterized** in that
the reel (12) is used exclusively for retaining the closure parts (26) and the counterparts (27), as well as for the synchronous feeding of the non-skid belt (11) and that the latter is stored in a separate magazine.

4. Non-skid device according to one of the preceding claims,
**characterized** in that
the reel (12) is provided with a brake for subjecting to a predetermined braking force.

5. Non-skid device according to claim 4,
**characterized** in that
the brake comprises a spiral spring, which at one end is fixed to the guide arm (13) and at the other end to the reel (12).

6. Non-skid device according to one of the preceding claims,
**characterized** in that
on the legs (31, 32) of the spring clip (24) is in each case provided a hook (26) with a collecting mouth (29) and on the other end of the non-skid belt (11) in each case associated rings (27).

7. Non -skid device according to claim 6,
**characterized** in that
the hook (26) and the ring (27) are interconnected by means of a chain strand (25), which in the fitted state of the non-skid belt (11) is guided along the associated tyre side and is connected by means of transverse strands to a tread network or the like of the non-skid belt (11).

8. Non-skid device according to one of the preceding claims,
**characterized** in that
in the vicinity of the two tyre sides is in each case provided a double hook (46) having a collecting mouth (47) fixed by means of a fastening (48) to the associated rim (49) and that the closure parts of the non-skid belt (11′) at both ends in each case comprise a ring (27, 50).

9. Non-skid device according to one of the preceding claims,
**characterized** in that
the closure parts (26, 27, 50) of the non-skid belt (11, 11′) are provided with a fitting, e.g. a pin and that the associated fastenings (36, 37) in each case comprise pairwise arranged resilient holding legs, which detachably receive the fittings.

10. Non-skid device according to one of the preceding claims,
**characterized** in that
the reel (12) is provided with an actuator for conveying or winding back the non-skid belt (11).

11. Non-skid device according to claim 10,
**characterized** in that
the actuator comprises a crank (41) and an advance barrier preventing unintentional rotation counter to the winding back direction.

12. Non-skid device according to one of the preceding claims,
**characterized** in that
there is a hydraulic or pneumatic actuator for the guide arm (13).

13. Non-skid device according to one of the preceding claims,
**characterized** in that
the guide arm (13) is moved away from the tyre (14) with a resilient pretension.


**Revendications**

1. Dispositif antidérapage pour un pneu de véhicule, comprenant une ceinture antidérapante (11) qui se relie aux deux extrémités de manière amovible, un dispositif auxiliaire prévu sur le véhicule avec un bras de guidage (13) pour rapprocher et monter la ceinture antidérapante sur le pneumatique (14) ainsi qu'un volume de stockage prévu sur le véhicule pour recevoir la ceinture antidérapante en position de repos, dispositif

EP 0 407 710 B1

**caractérisé** en ce que

le bras de guidage (13) comporte un rouleau (12) monté à rotation, d'axe parallèle à l'axe du pneumatique (14) et situé dans l'alignement du pneumatique,

le rouleau (12) étant mis en contact avec le pneumatique par rapprochement du bras de guidage (13) contre le pneumatique (14) pour mettre en place la ceinture antidérapante (11), et créer un mouvement de rotation synchrone entre le pneumatique (14) et le rouleau (12),

le rouleau (12) étant par ailleurs situé à une certaine distance du pneumatique (14) par éloignement du bras de guidage (13),

la ceinture antidérapante (11) étant dévidée du rouleau (12) pendant le mouvement de rotation du pneumatique (14) ou du rouleau (12),

la ceinture antidérapante (11) comportant à son extrémité initiale un étrier élastique (24) en forme de U pour la mise en place sur le pneumatique (14) par pincement latéral par les deux branches (31, 32) élastiques vers l'intérieur,

les branches (31, 32) arrivant jusqu'au niveau des flancs du pneumatique,

la zone (30) qui relie les branches (31, 32) venant s'appliquer contre la surface de roulement du pneumatique (14) lorsque l'étrier est mis en place,

l'extrémité libre des branches (31, 32) comporte chaque fois un fermoir (26) suivant un alignement prédéterminé par rapport aux branches,

la ceinture antidérapante (11) étant munie à ses extrémités de pièces correspondantes (27) au fermoir (26),

le rouleau (12) étant muni de deux pièces frontales (21) qui arrivent jusqu'au niveau des flancs du pneumatique (14) lorsque le rouleau (12) est en contact avec le pneumatique (14) et sont à une distance axiale prédéterminée par rapport au pneumatique,

les parties latérales (21) comportent des moyens de fixation amovibles (36, 37) pour les fermoirs (26) de la partie initiale ou les étriers élastiques (24) et les pièces correspondantes (27) de l'extrémité, et qui sont décalées radialement et suivant la longueur de la ceinture antidérapante (11), le cas échéant dans la direction périphérique et suivant un alignement prédéterminé vers les fermoirs (26) du côté initial et

l'étrier élastique (24) comporte, au niveau de la surface de roulement du pneumatique, un bras de levier aligné dans la direction périphérique du pneumatique (14), bras qui, à l'état monté et pour une rotation du pneumatique, arrive entre la surface de roulement et la voie de circulation (51) et par la pression sur un alignement prédéterminé de l'étrier à ressort (24) ou des fermoirs (26) qu'il porte par rapport au pneumatique (14).

2. Dispositif antidérapage selon la revendication 1,
**caractérisé** en ce que
la ceinture antidérapage (11) est enroulée sur le rouleau (12) à l'état de repos, à la manière d'une bobine de réserve et les parties latérales sont des disques (21).

3. Dispositif antidérapage selon la revendication 1,
**caractérisé** en ce que
le rouleau (12) sert uniquement à la fixation des fermoirs (26) et de la pièce correspondante (27) ainsi que pour l'alimentation synchrone de la ceinture antidérapage (11) et le stockage de la ceinture (11) se fait dans un réceptacle distinct.

4. Dispositif antidérapage selon l'une des revendications précédentes,
**caractérisé** en ce que
le rouleau (12) est muni d'un dispositif de freinage qui exerce une force de freinage prédéterminée.

5. Dispositif antidérapage selon la revendication 4,
**caractérisé** en ce que
le dispositif de freinage est formé d'un ressort en spirale relié par une extrémité à un point fixe au bras de guidage (13) et par l'autre extrémité au rouleau (12).

6. Dispositif antidérapage selon l'une des revendications précédentes,
**caractérisé** en ce que
les branches (31, 32) de l'étrier à ressort (24) comportent chaque fois un crochet (26) avec un bec (29) et à l'autre extrémité de la ceinture antidérapage (11) on a chaque fois un oeillet (27) correspondant.

7. Dispositif antidérapage selon la revendication 6,
**caractérisé** en ce que
le crochet (26) et l'oeillet (27) sont reliés par une chaîne (25) qui, lorsque la ceinture antidérapage (11) est mise en place, passe le long du flanc correspondant du pneumatique et est reliée à un filet ou moyen analogue de la ceinture antidérapage (11) par des liens transversaux.

8. Dispositif antidérapage selon l'une des revendications précédentes,
**caractérisé** en ce que
au niveau des deux flancs du pneumatique il est chaque fois prévu un crochet double (46) avec un bec (47)

8

fixé par un support (48) à la jante (49) correspondante, et les fermoirs de la ceinture antidérapage (11') sont constitués aux extrémités correspondantes chaque fois par un oeillet (27, 50).

9. Dispositif antidérapage selon l'une des revendications précédentes,
**caractérisé** en ce que
les fermoirs (26, 27, 50) de la ceinture antidérapage (11, 11') sont munis d'une pièce de forme par exemple d'un goujon et en ce que les fixations correspondantes (36, 37) se composent chaque fois de paires de branches de fixation élastiques qui reçoivent les pièces de forme de manière amovible.

10. Dispositif antidérapage selon l'une des revendications précédentes,
**caractérisé** en ce que
le rouleau (12) est muni d'un dispositif de manoeuvre pour rebobiner la ceinture antidérapage (11).

11. Dispositif antidérapage selon la revendication 10,
**caractérisé** en ce que
le dispositif de manoeuvre se compose d'une manivelle (41) et d'un cliquet anti-retour interdisant toute rotation accidentelle dans le sens opposé du sens d'enroulement.

12. Dispositif antidérapage selon l'une des revendications précédentes,
**caractérisé** par
un dispositif de manoeuvre hydraulique ou pneumatique pour le bras de guidage (13).

13. Dispositif antidérapage selon l'une des revendications précédentes,
**caractérisé** en ce que
le bras de guidage (13) est écarté du pneumatique (14) par une précontrainte à ressort.

Fig. 1

Fig. 2

Fig. 3